# EUROPÄISCHE PATENTSCHRIFT

(11) **EP 2 020 538 B1**
(45) Veröffentlichungstag und Bekanntmachung des Hinweises auf die Patenterteilung: **17.05.2017**
(21) Anmeldenummer: 07019817.1
(22) Anmeldetag: 10.10.2007
(51) Int. Cl.: F16J 3/04

(54) **Faltenbalg für eine Bremseinrichtung**
Gaiter for a braking device
Soufflet pour un dispositif de freinage

(30) Priorität: 03.08.2007 EP 07015315
(43) Veröffentlichungstag der Anmeldung: 04.02.2009
(73) Patentinhaber: Carl Freudenberg KG, 69469 Weinheim (DE)
(72) Erfinder: Knoll, Martin, 6342 Niederndorf (DE)

(56) Entgegenhaltungen:
- EP-A- 0 953 785
- WO-A-2007/012522
- GB-A- 2 241 753

## Beschreibung

### Technisches Gebiet

Die Erfindung betrifft einen Faltenbalg zur Abdichtung einer Bremseinrichtung, umfassend einen Rahmen und einen Tragkörper die durch einen Federkörper miteinander verbunden sind.

### Stand der Technik

Neue Entwicklungen in der Bremstechnologie sehen den Einsatz einer Keilbremse vor. Das Prinzip einer derartigen Bremse ist in der DE 198 19 564 A1 beschrieben. Die Keilbremse umfasst einen Bremsbelag der an eine Bremsscheibe anpressbar ist. Bei einer Keilbremse erfolgt zum Anpressen des Bremsbelages eine kombinierte Bewegung des Bremsbelages senkrecht zu der Bremsscheibe und in Drehrichtung der Bremsscheibe. Durch die Bewegung des Bremsbelages in Drehrichtung der Bremsscheibe erfolgt eine Selbstverstärkung des Anpressdrucks des Bremsbelages an die Bremsscheibe. Diese Selbstverstärkung ist vorteilhaft, da sie die Verwendung von elektrischen Aktuatoren mit geringer Leistung ermöglicht. Zur Erzielung dieses Effektes ist jedoch eine größere Bewegung des Bremsbelages in Drehrichtung der Bremsscheibe als senkrecht zur Bremsscheibe erforderlich. Aufgrund dessen waren Bremseinrichtungen bislang schwierig abzudichten.

### Darstellung der Erfindung

Der Erfindung liegt die Aufgabe zugrunde, einen Faltenbalg zur Abdichtung einer Bremseinrichtung bereitzustellen, die eine hohe Flexibilität aufweist. Diese Aufgabe wird mit den Merkmalen von Anspruch 1 gelöst. Auf vorteilhafte Ausgestaltungen nehmen die Unteransprüche Bezug.

Zur Lösung der Aufgabe ist der Tragkörper gegenüber dem Rahmen in allen drei Raumrichtungen beweglich, wobei der Federkörper so ausgebildet ist, dass der Tragkörper in einer Ebene parallel zum Rahmen beweglicher ist als in der Ebene senkrecht zu dem Rahmen. Dadurch ist ein an dem Tragkörper befestigter Bremsbelag sehr flexibel angebunden und es ist möglich, dass der Bremsbelag in der Richtung parallel zum Rahmen und zum Tragkörper eine größere Bewegung ausführt als senkrecht zum Rahmen und zum Tragkörper. Der so ausgestaltete Faltenbalg eignet sich also insbesondere zum Abdichten einer Keilbremse, um dort Aktuatoren vor dem Eindringen von Schmutz und Feuchtigkeit zu schützen.

Der Federkörper weist zumindest eine umlaufende Vertiefung und zumindest eine umlaufende Erhöhung auf. Dadurch entsteht eine vollständige und umlaufende Rollfalte. Diese ermöglicht eine große Beweglichkeit des Tragkörpers gegenüber dem Rahmen senkrecht zum Rahmen aber auch parallel in der Ebene des Tragkörpers. Der Abstand und auch die Höhendifferenz zwischen Erhöhung und Vertiefung können über den Umfang variieren, um so unterschiedliche Freiwege in der Ebene des Tragkörpers zu ermöglichen.

Der Federkörper kann in der Draufsicht betrachtet zumindest abschnittweise wellenförmig ausgebildet sein. Die wellenförmige Geometrie verbessert signifikant die Beweglichkeit des Faltenbalges und zwar insbesondere Längs zu der Wellengeometrie. Die Wellengeometrie fungiert ebenfalls als Faltenbalg dessen Wirkrichtung senkrecht auf der Wirkrichtung der aus der Erhöhung und der Vertiefung gebildeten ersten Faltengeometrie steht. Dazu können vorteilhafterweise die Vertiefung und die Erhöhung wellenförmig ausgebildet sein.

Der Faltenbalg kann in der Draufsicht betrachtet oval ausgebildet sein. Die ovale Ausgestaltung folgt einerseits den Bauraum-Anforderungen und andererseits resultiert hieraus eine größere Beweglichkeit des Tragkörpers in Richtung der längeren Mittellinie als in Richtung der kürzeren Mittellinie. Die Anordnung in einer Bremseinrichtung erfolgt dabei so, dass die längere Mittellinie des Faltenbalges in Drehrichtung weist.

Die den Längsseiten des Faltenbalges zugeordneten Abschnitte des Federkörpers können zumindest abschnittsweise wellenförmig ausgebildet sein. Entweder kann die gesamte Längsseite jeweils bis zum Beginn der Radien oder auch nur ein Teilstück der Längsseite mit der Wellengeometrie versehen sein. Je größer die Wellengeometrie ist, desto größer ist Beweglichkeit des Tragkörpers gegenüber dem Rahmen entlang der Längsseite.

An dem Tragkörper kann ein Bremsbelag befestigbar sein. Dazu kann der Tragkörper Befestigungsmittel wie Bohrungen aufweisen. Der Bremsbelag ist dabei auf einer Seite des Tragkörpers angeordnet und auf der anderen Seite des Tragkörpers greift der Aktuator an, der den Bremsbelag an die Bremsscheibe presst.

Der Faltenbalg kann an einem Bremssattel befestigbar sein. Dazu weist der Rahmen ebenfalls Befestigungsmittel wie Bohrungen auf. Der Bremssattel mit dem daran befestigten Rahmen ist starr und der Tragkörper und der daran befestigten Bremsbelag bewegen sich relativ dazu.

Der oben beschriebene Faltenbalg eignet sich insbesondere zur Verwendung in einer Keilbremse. In einer Keilbremse kann der Faltenbalg vorteilhafterweise zwischen Bremsbelag und Bremssattel angeordnet sein. Der Faltenbalg verhindert das Eindringen von Verschmutzungen wie Bremsstaub in die Bremseinrichtung und verhindert einen vorzeitigen Verschleiß insbesondere der elektrischen Aktuatoren. Aufgrund der Beweglichkeit des Faltenbalgs insbesondere in der Ebene des Rahmens ist es möglich, dass der Bremsbelag eine größere Wegstrecke parallel zum Rahmen als senkrecht zum Rahmen ausführt. Der Einsatz der Keilbremse ist in Kraftfahrzeugen aber auch in Aufzügen, Flurförderanlagen, Förderbändern und Rolltreppen denkbar.

### Kurzbeschreibung der Zeichnung

Ein Ausführungsbeispiel des erfindungsgemäßen Faltenbalges wird nachfolgend anhand der Figuren näher erläutert. Diese zeigen, jeweils schematisch:
Fig. 1 einen erfindungsgemäßen Faltenbalg im Dreiviertelschnitt;
Fig. 2 den Faltenbalg gemäß Figur 1 in der Draufsicht;
Fig. 3 den Faltenbalg gemäß Figur 1 in seitlicher Schnittdarstellung;
Fig. 4 im Detail den Federkörper in einem Faltenbalg gemäß Figur 1;
Fig. 5 den Faltenbalg mit montiertem Bremsbelag und Aktuator.

### Ausführung der Erfindung

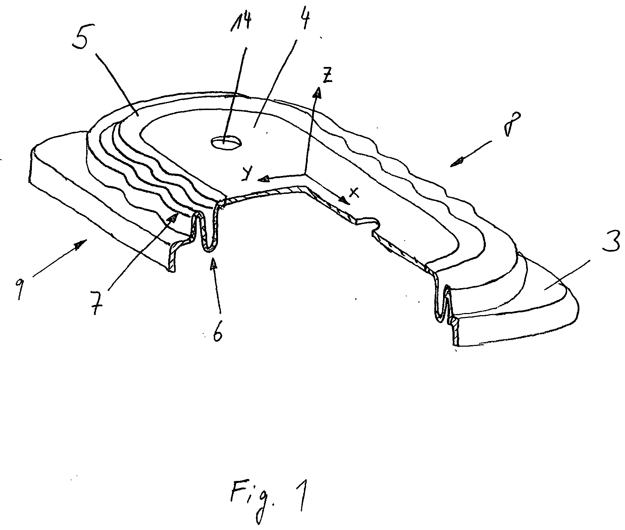

Figur 1 zeigt einen Faltenbalg 1 zur Abdichtung einer Bremseinrichtung 2, hier einer Keilbremse. Der Faltenbalg besteht aus einem Rahmen 3 und einem Tragkörper 4, wobei beide Teile aus einem metallischen Werkstoff bestehen und als Stanzteile ausgebildet sind. Der Rahmen 3 ist oval ausgebildet und weist eine Öffnung auf, zu der der Tragkörper 4, der ebenfalls oval ausgebildet ist, konzentrisch angeordnet ist. Der Rahmen 3 und der Tragkörper 4 sind durch einen Federkörper 5 aus elastomerem Werkstoff miteinander verbunden, so dass der Tragkörper 4 gegenüber dem Rahmen 3 in allen drei Raumrichtungen x, y, z beweglich ist. Dabei ist der Federkörper 5 so ausgebildet, dass der Tragkörper 4 in einer Ebene x parallel zum Rahmen 3 beweglicher ist als in der Ebene z senkrecht zu dem Rahmen 3. Der Federkörper 5 weist eine umlaufende Vertiefung 6 und eine umlaufende Erhöhung 7 auf, wodurch sich umlaufende Rollfalten ergeben. Diese Rollfalten ermöglichen eine verlustarme Bewegung des Tragkörpers 4 gegenüber dem Rahmen 3 in z-Richtung und je nach Breite der Vertiefung 6 und der Erhöhung 7 auch eine Bewegung in x- und y-Richtung. Um die Beweglichkeit in x-Richtung zu verbessern, ist der Federkörper 5 und somit auch die Vertiefung 6 und die Erhöhung 7 an den den Längsseiten 8, 9 des Faltenbalges 1 zugeordneten Abschnitten des Federkörpers 5 vollständig wellenförmig ausgebildet. Der Tragkörper 4 weist Befestigungsmittel 14, hier Bohrungen auf. Dadurch kann an dem Tragkörper 4 an einer Seite ein Bremsbelag 10 und an der anderen Seite ein Aktuator 11 befestigt werden. Der Federkörper 5 ist stoffschlüssig an den Rahmen 3 und den Tragkörper 4 angebunden, wobei Rahmen 3 und Tragkörper 4 zur Verbesserung der Verbindung vorbehandelt sind.

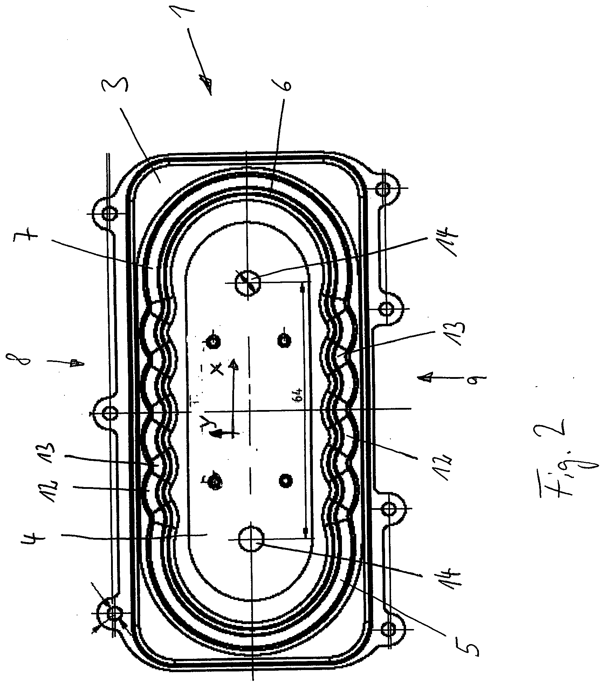

Figur 2 zeigt den Faltenbalg 1 gemäß Figur 1 in der Draufsicht. Für die Wellenform des Federkörpers 5 sind Abschnitte des Federkörpers 5 als Kreissegment ausgebildet, wodurch sich Wellenberge 12 und Wellentäler 13 ergeben, die aneinander gereiht sind. Die Kreissegmente, die die Wellenberge 12 und Wellentäler 13 ergeben, erstrecken sich jeweils über einen Winkel von 55 bis 75°, wobei in dieser Ausgestaltung ein Winkel von 65° gewählt wurde.

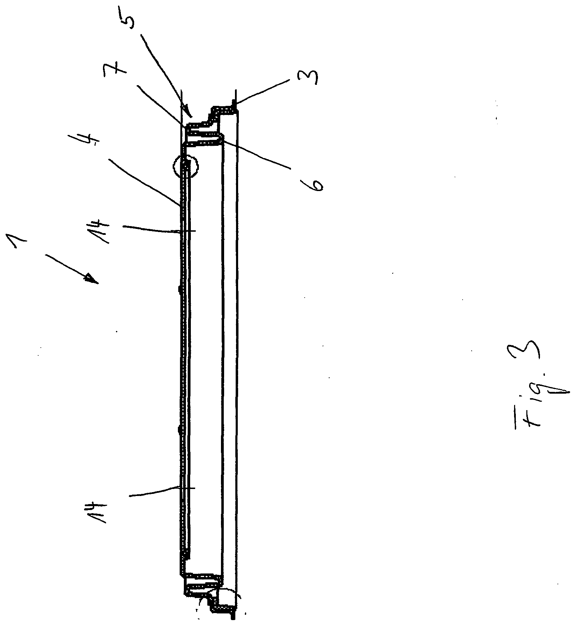

Figur 3 zeigt den Faltenbalg 1 gemäß Figur 1 in der Seitenansicht.

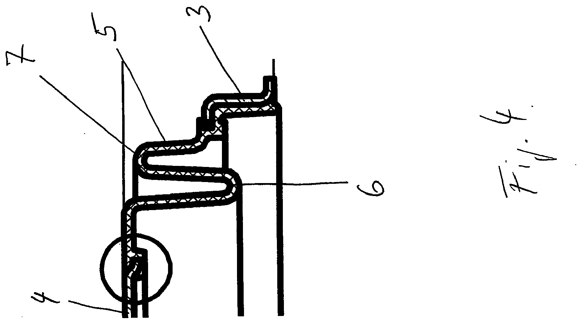

Figur 4 zeigt im Detail die Rollfaltengeometrie des Faltenbalgs 1 gemäß Figur 1.

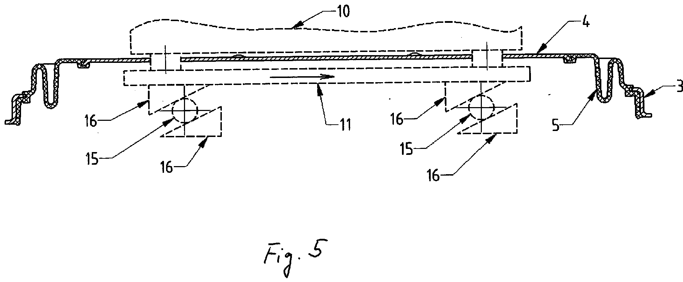

Figur 5 zeigt eine Bremseinrichtung 2 mit einem erfindungsgemäßen Faltenbalg 1 gemäß Figur 1, wobei an dem Tragkörper 4 des Faltenbalgs 1 an einer Seite der Bremsbelag 10 und an der anderen Seite der Aktuator 11 befestigt ist. Zur besseren Übersichtlichkeit ist der Federkörper 5 hier nicht dargestellt. Der Aktuator umfasst Rollenkörper 15 die an Keilkörpern 16 abrollen, deren Abrollflächen gegenüber dem Bremsbelag 10 und der Bremsscheibe (nicht dargestellt) schräg angestellt sind. Es handelt sich demnach hier um eine Keilbremse.

## Patentansprüche

1. Faltenbalg (1) zur Abdichtung einer Bremseinrichtung (2), umfassend einen Rahmen (3) und einen Tragkörper (4) die durch einen Federkörper (5) miteinander verbunden sind, wobei der Tragkörper (4) gegenüber dem Rahmen (3) in allen drei Raumrichtungen (x, y, z) beweglich ist, wobei der Federkörper (5) so ausgebildet ist, dass der Tragkörper (4) in einer Ebene (x) parallel zum Rahmen (3) beweglicher ist als in der Ebene (z) senkrecht zu dem Rahmen (3), **dadurch gekennzeichnet, dass** der Federkörper (5) zumindest eine umlaufende Vertiefung (6) und zumindest eine umlaufende Erhöhung (7) aufweist, wodurch eine vollständige und umlaufende Rollfalte entsteht.

2. Faltenbalg nach Anspruch 1, **dadurch gekennzeichnet, dass** der Federkörper (5) in der Draufsicht betrachtet zumindest abschnittweise wellenförmig ausgebildet ist.

3. Faltenbalg nach Anspruch 2, **dadurch gekennzeichnet, dass** die Vertiefung (6) und die Erhöhung (7) wellenförmig ausgebildet sind.

4. Faltenbalg nach einem der Ansprüche 1 bis 3, **dadurch gekennzeichnet, dass** der Faltenbalg (1) in der Draufsicht betrachtet oval ausgebildet ist.

5. Faltenbalg nach Anspruch 4, **dadurch gekennzeichnet, dass** die den Längsseiten (8, 9) des Faltenbalges (1) zugeordneten Abschnitte des Federkörpers (5) zumindest abschnittsweise wellenförmig ausgebildet sind.

6. Faltenbalg nach einem der Ansprüche 1 bis 5, **dadurch gekennzeichnet, dass** an dem Tragkörper (4) ein Bremsbelag (10) befestigbar ist.

7. Faltenbalg nach einem der Ansprüche 1 bis 6, **dadurch gekennzeichnet, dass** der Faltenbalg (1) an einem Bremssattel (11) befestigbar ist.

8. Verwendung des Faltenbalgs (1) nach einem der vorherigen Ansprüche in einer Keilbremse.

## Claims

1. Gaiter (1) for sealing a brake device (2), comprising a frame (3) and a supporting body (4) which are connected to one another by way of a spring body (5), it being possible for the supporting body (4) to be moved in all three spatial directions (x, y, z) with respect to the frame (3), the spring body (5) being configured in such a way that the supporting body (4) is more movable in a plane (x) parallel to the frame (3) than in the plane (z) perpendicularly with respect to the frame (3), **characterized in that** the spring body (5) has at least one circumferential depression (6) and at least one circumferential elevation (7), as a result of which a complete and circumferential rolling fold is produced.

2. Gaiter according to Claim 1, **characterized in that**, as viewed in plan view, the spring body (5) is of undulating configuration at least in sections.

3. Gaiter according to Claim 2, **characterized in that** the depression (6) and the elevation (7) are of undulating configuration.

4. Gaiter according to one of Claims 1 to 3, **characterized in that** the gaiter (1) is of oval configuration as viewed in plan view.

5. Gaiter according to Claim 4, **characterized in that** the sections of the spring body (5) which are assigned to the longitudinal sides (8, 9) of the gaiter (1) are of undulating configuration at least in sections.

6. Gaiter according to one of Claims 1 to 5, **characterized in that** a brake lining (10) can be fastened to the supporting body (4).

7. Gaiter according to one of Claims 1 to 6, **characterized in that** the gaiter (1) can be fastened to a brake calliper (11).

8. Use of the gaiter (1) according to one of the preceding claims in a wedge brake.

## Revendications

1. Soufflet (1) d'étanchéité d'un dispositif de freinage (2), comprenant un cadre (3) et un corps porteur (4) sont reliés entre eux par un corps de ressort (5), le corps porteur (4) étant mobile par rapport au cadre (3) dans toutes les trois directions dans l'espace (x, y, z), le corps de ressort (5) étant réalisé de telle sorte que le corps porteur (4) est mobile dans un plan (x) parallèlement au cadre (3) comme dans le plan (z) perpendiculairement au cadre (3), **caractérisé en ce que** le corps de ressort (5) comporte au moins un renfoncement (6) périphérique et au moins une augmentation (7) périphérique, produisant un pli de rebroussement entier et périphérique.

2. Soufflet selon la revendication 1, **caractérisé en ce que** le corps de ressort (5) est réalisé, dans la vue en élévation, au moins en partie de façon ondulante.

3. Soufflet selon la revendication 2, **caractérisé en ce que** le renfoncement (6) et l'augmentation (7) sont réalisés de façon ondulante.

4. Soufflet selon l'une quelconque des revendications 1 à 3, **caractérisé en ce que** le soufflet (1) est réalisé de façon ovale dans la vue en élévation.

5. Soufflet selon la revendication 4, **caractérisé en ce que** les sections du corps de ressort (5) associées aux côtés longitudinaux (8, 9) du soufflet (1) sont réalisées au moins en partie de façon ondulante.

6. Soufflet selon l'une quelconque des revendications 1 à 5, **caractérisé en ce qu'**une garniture de frein (10) peut être fixée au corps porteur (4).

7. Soufflet selon l'une quelconque des revendications 1 à 6, **caractérisé en ce que** le soufflet (1) peut être fixé à un étrier de frein (11).

8. Utilisation du soufflet (1) selon l'une quelconque des revendications précédentes dans un frein à coin.
